(19)

**Europäisches Patentamt**
**European Patent Office**
**Office européen des brevets**

(11) **EP 4 636 911 A1**

(12) **EUROPEAN PATENT APPLICATION**

(43) Date of publication:
**22.10.2025 Bulletin 2025/43**

(21) Application number: **24218629.4**

(22) Date of filing: **10.12.2024**

(51) International Patent Classification (IPC):
*H01M 50/103* (2021.01)      *H01M 50/533* (2021.01)
*H01M 50/536* (2021.01)

(52) Cooperative Patent Classification (CPC):
**H01M 50/533; H01M 50/103; H01M 50/536;
H01M 50/55**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.04.2024 CN 202420820269 U
31.05.2024 CN 202421243598 U
27.06.2024 PCT/CN2024/101776**

(71) Applicant: **Eve Power Co., Ltd.
Jingmen, Hubei 448000 (CN)**

(72) Inventors:
• **FANG, Hua
Jingmen, Hubei, 448000 (CN)**
• **CHEN, Xianyang
Jingmen, Hubei, 448000 (CN)**
• **YUAN, Zhao
Jingmen, Hubei, 448000 (CN)**

(74) Representative: **Berggren Oy
P.O. Box 16
Fabianinkatu 21
00101 Helsinki (FI)**

(54) **CELL AND BATTERY PACK**

(57)     The disclosure provides a cell (100) and a battery pack. The cell (100) includes a housing (10), a cell unit (20), and a plurality of connecting sheets (30); the housing (10) is provided with a pole post (11); the cell unit (20) is disposed in the housing (10) and provided with a plurality of tabs (21); and each of the connecting sheets (30) includes a pole post connecting portion (31) and a plurality of tab connecting portions (32) connected to the pole post connecting portion (31), the pole post (11) is electrically connected to the pole post connecting portion (31), and one of the plurality of tabs (21) is electrically connected to at least two of the tab connecting portions (32).

EP 4 636 911 A1

## Description

TECHNICAL FIELD

The disclosure relates to the field of battery, and in particular, to a cell and a battery pack.

BACKGROUND

Generally, a pouch battery pack is composed of a plurality of cells, each cell is provided with a plurality of jell rolls, and each jell roll is provided with a plurality of tabs. The tabs of different jell rolls may be welded through a connecting sheet, and then the connecting sheet is welded to a pole post, so as to realize the current transmission between the jell rolls and the pole post, thereby realizing charging and discharging of the cell. During the charging and discharging of the cell, the current is mainly transmitted through a welding region formed by the tabs, the connecting sheet, and the pole post, therefore, an area of the welding region determines the ability of the current flowing through the cell.

SUMMARY

In related art, an area of a welding region formed between a connecting sheet and tabs of a jell roll in a cell is smaller, which in turn renders that the internal resistance of the cell is larger and the ability of the current flowing through the cell is weaker, and therefore the requirements for the use of the cell can not be met.

In a first aspect, some embodiments of the disclosure provide a cell, and the cell includes a housing, a cell unit, and a plurality of connecting sheets. The housing is provided with a pole post; the cell unit is disposed in the housing and provided with a plurality of tabs; and each of the connecting sheets includes a pole post connecting portion and a plurality of tab connecting portions connected to the pole post connecting portion, the pole post is electrically connected to the pole post connecting portion, and one of the plurality of tabs is electrically connected to at least two of the tab connecting portions.

In a second aspect, some embodiments of the disclosure provide a battery pack including the cell as described above.

In the embodiments of the disclosure, the cell is provided with the connecting sheet including a plurality of tab connecting portions, and each tab of the cell unit being electrically connected to at least two tab connecting portions, the cell can increase the flowing area of the current between the tabs and the connecting sheet 30, reduce the internal resistance of the cell, and improve the ability of the current flowing through the cell.

BRIEF DESCRIPTION OF THE DRAWINGS

FIG. 1 is a schematic cross-sectional structural diagram of a cell according to some embodiments of the disclosure.

FIG. 2 is a schematic structural diagram of a connecting sheet of the cell according to some embodiments of the disclosure.

FIG. 3 is a schematic structural diagram of two jell rolls of the cell according to some embodiments of the disclosure.

FIG. 4 is a schematic structural diagram of two connecting sheets and two jell rolls of the cell according to some embodiments of the disclosure.

FIG. 5 is another schematic structural diagram of two connecting sheets and two jell rolls of the cell according to some embodiments of the disclosure.

FIG. 6 is a first schematic plan view of a cover plate assembly according to some embodiments of the disclosure.

FIG. 7 is a second schematic plan view of the cover plate assembly according to some embodiments of the disclosure.

FIG. 8 is a third schematic plan view of the cover plate assembly according to some embodiments of the disclosure.

FIG. 9 is a fourth schematic plan view of the cover plate assembly according to some embodiments of the disclosure.

FIG. 10 is a fifth schematic plan view of the cover plate assembly according to some embodiments of the disclosure.

FIG. 11 is a sixth schematic plan view of the cover plate assembly according to some embodiments of the disclosure.

FIG. 12 is a seventh schematic plan view of the cover plate assembly according to some embodiments of the disclosure.

FIG. 13 is an eighth schematic plan view of the cover plate assembly according to some embodiments of the disclosure.

FIG. 14 is a ninth schematic plan view of the cover plate assembly according to some embodiments of the disclosure.

FIG. 15 is a tenth schematic plan view of the cover plate assembly according to some embodiments of the disclosure.

FIG. 16 is an eleventh schematic plan view of the cover plate assembly according to some embodiments of the disclosure.

FIG. 17 is a twelfth schematic plan view of the cover plate assembly according to some embodiments of the disclosure.

FIG. 18 is a thirteenth schematic plan view of the cover plate assembly according to some embodiments of the disclosure.

FIG. 19 is a fourteenth schematic plan view of the cover plate assembly according to some embodiments of the disclosure.

FIG. 20 is a fifteenth schematic plan view of the cover plate assembly according to some embodiments of the disclosure.

FIG. 21 is a sixteenth schematic plan view of the cover plate assembly according to some embodiments of the disclosure.

FIG. 22 is a seventeenth schematic plan view of the cover plate assembly according to some embodiments of the disclosure.

FIG. 23 is an eighteenth schematic plan view of the cover plate assembly according to some embodiments of the disclosure.

FIG. 24 is a nineteenth schematic plan view of the cover plate assembly according to some embodiments of the disclosure.

FIG. 25 is a twentieth schematic plan view of the cover plate assembly according to some embodiments of the disclosure.

FIG. 26 is a schematic plan view of a first connecting member according to some embodiments of the disclosure.

FIG. 27 is a schematic plan view of a second connecting member according to some embodiments of the disclosure.

DETAILED DESCRIPTION

In the description of the disclosure, unless otherwise specified or limited, the terms "connected", "connection", and "fixed" should be understood in a reasonably broad. For example, any of the terms can be a fixed connection, a detachable connection, or an integrated unit; alternatively, it can be a mechanical connection or an electrical connection; alternatively, it can be a direct connection or an indirect connection through an intermediate medium; and alternatively, it can be an internal connection of two components or an interaction relationship between two components. For an ordinary person skilled in the art, specific meanings of the above terms in the disclosure can be understood based on specific situations.

In the disclosure, unless otherwise specified or limited, "a first feature above or below a second feature" may include a direct contact between the first feature and the second feature, or an indirect contact through another feature between the first feature and the second feature, instead of the direct contact. Moreover, the first feature is disposed "on" or "above" the second feature, indicating that the first feature is directly above or diagonally above the second feature, or simply indicating that the first feature is horizontally higher than the second feature. The phrase "the first feature is disposed below or under the second feature" indicates that the first feature is directly below or diagonally below the second feature, or simply indicates that the first feature is horizontally lower than the second feature.

In the description of the disclosure, directional or positional relationships indicated by the terms "on", "above", "below", "front", "back", "left", "right", and the like, are based on the directional or positional relationships illustrated in the drawings, which are used for the convenience of describing the disclosure and simplifying the description, rather than indicating or implying that the devices or elements must have a specific direction, be constructed or operated in a specific direction. Therefore, the terms cannot be interpreted as a limitation on the disclosure. In addition, the terms "first" and "second" are used for the purpose of description and do not have specific meanings. Moreover, in the description of the disclosure, the term "a plurality of" indicates two or more than two, unless otherwise specified or limited.

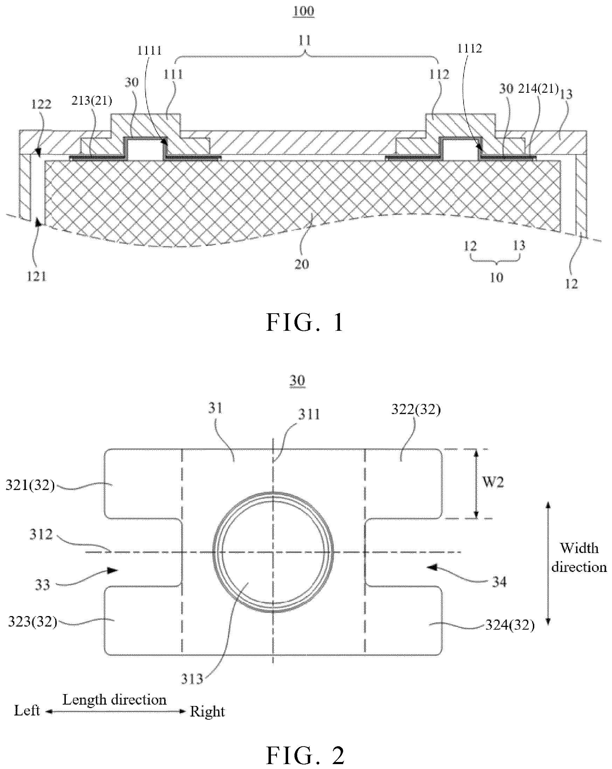

As illustrated in FIG. 1, some embodiments of the disclosure provide a cell 100, and the cell 100 includes a housing 10, a cell unit 20, and a plurality of connecting sheets 30. The housing 10 is provided with a pole post 11. The cell unit 20 is disposed in the housing 10 and provided with a plurality of tabs 21. The housing 10 includes a bottom casing 12 and a cover plate assembly, and the cover plate assembly includes a cover plate 13. Amounting cavity 121 is disposed in the bottom casing 12, a cavity opening 122 communicating with the mounting cavity 121 is disposed on the top of the bottom casing 12, and the cell unit 20 is installed into the mounting cavity 121 through the cavity opening 122. The cell unit 20 is a component for conducting electrochemical reactions to realize charging and discharging of the cell 100. Generally, the cell unit 20 is formed by winding a positive electrode sheet, a negative electrode sheet, and a separator between the positive electrode sheet and the negative electrode sheet. The winding methods and working principles of the positive electrode sheet, the negative electrode sheet, and the separator can refer to the related art, and will not be described in detail herein. In the disclosure, the cell 100 include one cell unit 20 or a plurality of cell units 20, the embodiments of the disclosure take the structure of one cell unit 20 as an example, but should not be understood as a limitation of the disclosure.

In order to realize the transmission of current, the plurality of tabs 21 of the cell unit 20 include at least one positive tab 213 and at least one negative tab 214, the positive tab 213 is electrically connected to the positive electrode sheet of the cell unit 20, and the negative tab 214 is electrically connected to the negative electrode sheet of the cell unit 20. During the use of the cell unit 20, the transmission of current in the cell unit 20 can be realized through the positive tab 213 and the negative tab 214.

As illustrated in FIG. 1, the cover plate 13 covers the cavity opening 122 of the mounting cavity 121 to seal the mounting cavity 121, so as to protect the cell unit 20. The pole post 11 is disposed on the cover plate 13, and the pole post 11 includes a positive pole post 111 and a negative pole post 112. The positive pole post 111 is electrically connected to the positive tab 213 of the cell unit 20 through one connecting sheet 30, and the negative pole post 112 is electrically connected to the negative tab 214 through another connecting sheet 30, so that the transmission of current in the cell 100 can be realized through the positive pole post 111 and the negative pole post 112.

In related art, an area of a welding region formed between the connecting sheet 30 and the tabs 21 of the cell unit 20 is smaller, which in turn renders that the internal resistance of the cell 100 is larger and the ability of the current flowing through the cell 100 is weaker, and therefore the requirements for the use of the cell 100 can not be met.

In some embodiments of the disclosure, as illustrated in FIG. 2, the connecting sheet 30 includes a pole post connecting portion 31 and a plurality of tab connecting portions 32 connected to the pole post connecting portion 31, the pole post connecting portion 31 is electrically connected to the pole post 11, and one tab 21 is electrically connected to at least two tab connecting portions 32.

In some embodiments, the connecting sheet 30 is a metal sheet, for example, a copper sheet, an aluminum sheet, a copper-aluminum alloy, or the like. As illustrated in FIG. 1, the cell 100 is provided with two connecting sheets 30, one of the two connecting sheets 30 is connected between the positive tab 213 and the positive pole post 111, and another of the two connecting sheets 30 is connected between the negative tab 214 and the negative pole post 112.

In the embodiments of the disclosure, two connecting sheets 30 are electrically connected to the positive pole post 111 and the negative pole post 112 through one pole post connecting portion 31, respectively. Moreover, two connecting sheets 30 are respectively fixed to the positive pole post 111 and the negative pole post 112 by welding, socket connection, or snapping connection, so that the two connecting sheets 30 are respectively in electrical contact with the positive pole post 111 and the negative pole post 112, so as to realize the conductivity between the connecting sheets 30 and the pole post 11. Referring to FIG. 1 and FIG. 2 together, the pole post connecting portion 31 of each connecting sheet 30 is provided with a convex hull 313, the positive pole post 111 is provided with a first groove 1111 corresponding to the convex hull 313 of the pole post connecting portion 31 of one connecting sheet 30, and the convex hull 313 of the pole post connecting portion 31 of one connecting sheet 30 is inserted into the first groove 1111 and welded to the positive pole post 111; the negative pole post 112 is provided with a second groove 1112 corresponding to the convex hull 313 of the pole post connecting portion 31 of another connecting sheet 30, and the convex hull 313 of the pole post connecting portion 31 of another connecting sheet 30 is inserted into the second groove 1112 and welded to the negative pole post 112, so as to realize the welding between the two connecting sheets 30 and the pole post 11, and facilitate the rapid positioning between the two connecting sheets 30 and the pole post 11.

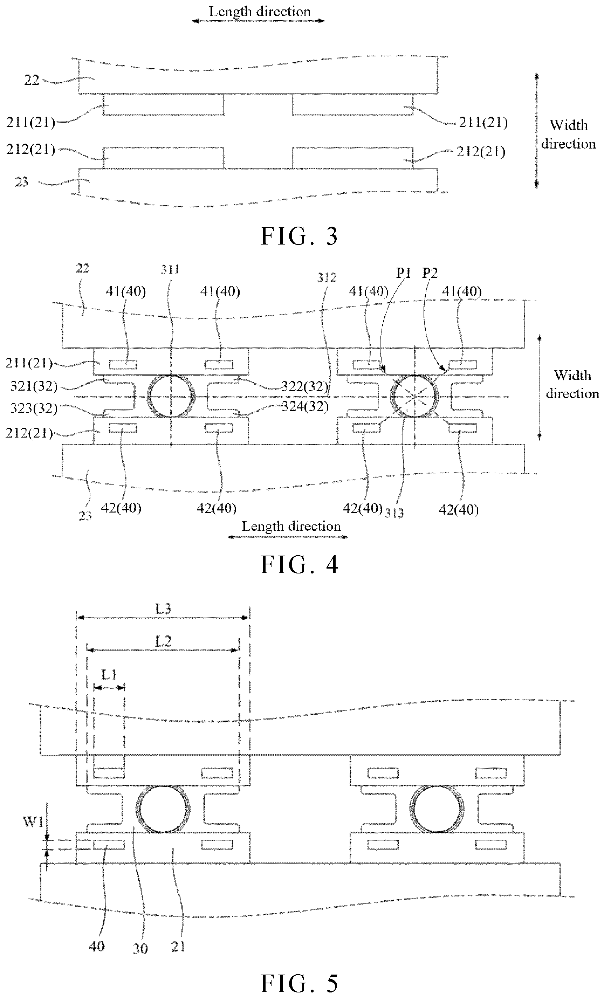

In some embodiments, as illustrated in FIG. 2, FIG. 3, and FIG. 4, each connecting sheet 30 includes a plurality of tab connecting portions 32, during the assembly, each tab 21 of the cell unit 20 is electrically connected to at least two tab connecting portions 32, and each of the tab connecting portions 32 is in electrical contact with corresponding one tab 21 by welding, socket connection, snapping connection, or the like, so as to realize stable electrical contact. For example, as illustrated in FIG. 4, the connecting sheet 30 is provided with four tab connecting portions 32, two of the four tab connecting portions 32 (for example, a first left connecting portion 321 and a first right connecting portion 322) are electrically connected to one tab 21 (for example, a first tab 211), and another two of the four tab connecting portions 32 (for example, a second left connecting portion 323 and a second right connecting portion 324) are electrically connected to another tab 21 (for example, a second tab 212). In some embodiments, each tab 21 is connected to three, four, five, or more than five tab connecting portions 32.

In the embodiments of the disclosure, the cell 100 is provided with the connecting sheet 30 including a plurality of tab connecting portions 32, and each tab 21 of the cell unit 20 being electrically connected to at least two tab connecting portions 32, the cell 100 can increase the flowing area of the current between the tabs 21 and the connecting sheet 30, reduce the internal resistance of the cell 100, and improve the ability of the current flowing through the cell 100.

In addition, in some embodiments, each tab 21 is electrically connected to at least two tab connecting portions 32. When the current in the tab 21 is transmitted to the connecting sheet 30, shunt of the current in the connecting sheet 30 can be realized through at least two tab connecting portions 32, so as to reduce a value of the current in each tab connecting portion 32 under the condition that the total current remains unchanged, which can reduce heat generated by the connecting sheet 30, and avoid temperature of the cell 100 being too high during the use of the cell 100.

In some embodiments, referring to FIG. 2, FIG. 3, and FIG. 4 together, two tab connecting portions 32 connected to one tab 21 are respectively disposed at two sides of the pole post connecting portion 31 in a length direction of the connecting sheet 30. As illustrated in FIG. 2, in some embodiments, the pole post connecting portion 31 is in a square shape, and two dotted lines extending in a width direction of the connecting sheet 30 respectively represent a left edge and a right edge of the pole post connecting portion 31. The connecting sheet 30 includes four tab connecting portions 32, which are defined as the first left connecting portion 321, the first right connecting portion 322, the second left connecting portion 323, and the second right connecting portion 324, respectively.

As illustrated in FIG. 4, the first left connecting portion 321 and the first right connecting portion 322 are connected to one tab 21 (the first tab 211), and the first left connecting portion 321 and the first right connecting portion 322 are respectively disposed at a left side and a right side of the pole post connecting portion 31; and the second left connecting portion 323 and the second right connecting portion 324 are connected to another tab 21 (the second tab 212), and the second left connecting portion 323 and the second right connecting portion 324 are respectively disposed at a left side and a right side of the pole post connecting portion 31.

In the above embodiments, every two tab connecting portions 32 connected to one tab 21 are respectively disposed at opposite two sides of the pole post connecting portion 31, so that the force on the connecting sheet 30 can be more balanced and even, improving the situations that the connecting sheet 30 shakes due to unbalanced force and the connection between the connecting sheet 30 and the tabs 21 becomes loose.

It should be noted that the terms "left" and "right" in the first left connecting portion 321 and the first right connecting portion 322 are used to indicate the relative position between the first left connecting portion 321 and the first right connecting portion 322, that is, the first left connecting portion 321 is at the left side of the first right connecting portion 322 and the first right connecting portion 322 is at the right side of the first left connecting portion 321, and do not indicate the absolute position relationship between the first left connecting portion 321 and the first right connecting portion 322. The second left connecting portion 323 and the second right connecting portion 324 are defined for the same reason and will not be repeated here.

In the disclosure, the cell unit 20 is a jell roll, or the cell unit 20 includes a plurality of jell rolls. In some embodiments, the cell unit 20 is a jell roll, two tabs 21 connected to one connecting sheet 30 are two tabs 21 of the jell roll. For example, the cell unit 20 is provided with two positive tabs 213 and two negative tabs 214, one connecting sheet 30 is connected between two positive tabs 213; alternatively, one connecting sheet 30 is connected between two negative tabs 214; and alternatively, one connecting sheet 30 is connected between two positive tabs 213, and another connecting sheet 30 is connected between two negative tabs 214.

In some embodiments, the cell unit 20 includes a plurality of jell rolls, and two tabs 21 connected to one connecting sheet 30 are two tabs 21 of two jell rolls. As illustrated in FIG. 3, the cell unit 20 includes a first jell roll 22 and a second jell roll 23, the tabs of the first jell roll 22 are defined as first tabs 211 and the tabs of the second jell roll 23 are defined as second tabs 212. Each of the first tabs 211 and one of the second tabs 212 are disposed corresponding to each other in a width direction of the connecting sheet 30. In the embodiments, the first tabs 211 are positive tabs 213, and the second tabs 212 are negative tabs 214.

As illustrated in FIG. 4, the first left connecting portion 321 and the first right connecting portion 322 are respectively disposed at two sides of the pole post connecting portion 31 in the length direction of the connecting sheet 30, and the first left connecting portion 321 and the first right connecting portion 322 are electrically connected to one first tab 211. The second left connecting portion 323 and the second right connecting portion 324 are respectively disposed at two sides of the pole post connecting portion 31 in the length of the connecting sheet 30, and the second left connecting portion 323 and the second right connecting portion 324 are electrically connected to one second tab 212.

In the embodiments of the disclosure, each tab 21 of the cell unit 20 is electrically connected to one connecting sheet 30 through two tab connecting portions 32, which can increase the flowing area of the current between the connecting sheet 30 and the tabs 21, reduce the internal resistance of the cell 100, improve the ability of the current flowing through the cell 100, and make the connection between the connecting sheet 30 and the tabs 21 simple and convenient enough to improve the assembly efficiency of the cell 100.

In some embodiments, as illustrated in FIG. 4, the first left connecting portion 321 and the first right connecting portion 322 are welded to the first tab 211 to form two welding regions 40 (for example, two first welding regions 41), respectively, and the second left connecting portion 323 and the second right connecting portion 324 are welded to the second tab 212 to form two welding regions 40 (for example, two second welding regions 42), respectively. The two first welding regions 41 are correspondingly disposed in the length direction of the connecting sheet 30 and symmetrically arranged relative to the pole post connecting portion 31. The two welding regions 40 are correspondingly disposed in the length direction of the connecting sheet 30 and symmetrically arranged relative to the pole post connecting portion 31.

Specifically, as illustrated in FIG. 2, the pole post connecting portion 31 is in a square shape, and the pole post connecting portion 31 has a first middle vertical line 311 extending in the width direction of the connecting sheet 30 and equally dividing the pole post connecting portion 31 into two halves. Referring to FIG. 2 and FIG. 4 together, the two first welding regions 41 on the first tab 211 are symmetrically arranged relative to the first center vertical line 311, and the two second welding regions 42 on the second tab 212 are symmetrically arranged relative to the first center vertical line 311 as well, which can make the force on the connecting sheet 30 more balanced and even, improve the stability of the connecting sheet 30 and the cell unit 20 in the housing 10, and enhance the reliability of the cell 100.

In the disclosure, when the two first welding regions 41 on the first tab 211 are symmetrically arranged relative to the pole post connecting portion 31, the two first welding regions 41 on the first tab 211 are symmetrically arranged relative to the first middle vertical line 311 of the pole post connecting portion 31 as described above. Moreover, it can also be understood that the pole post connecting portion 31 is a thicker "virtual straight line" extending in the width direction of the connecting sheet 30, and the two first welding regions 41 are symmetrically arranged relative to the "virtual straight line". The symmetrical arrangement of the two second welding regions 42 on the second tab 212 relative to the pole connection portion 31 follows the same interpretation, and will not be repeated here.

As illustrated in FIG. 2, the first left connecting portion 321 and the second left connecting portion 323 are correspondingly disposed in the width direction of the connecting sheet 30, and a first spacing region 33 is formed between the first left connecting portion 321 and the second left connecting portion 323. Referring to FIG. 2 and FIG. 4 together, one of the two first welding regions 41 on the first left connecting portion 321 and one of the two second welding regions 42 on the second left connecting portion 323 are correspondingly disposed in the width direction of the connecting sheet 30, and one of the two first welding regions 41 on the first left connecting portion 321 and one of the two second welding regions 42 on the second left connecting portion 323 are symmetrically arranged relative to the first spacing region 33.

As illustrated in FIG. 2, the pole post connecting portion 31 further has a second middle vertical line 312 extending in the length direction of the connecting sheet 30, and the second middle vertical line 312 equally divides the first spacing region 33 into two halves. Referring to FIG. 2 and FIG. 4 together, one of the two first welding regions 41 on the first left connecting portion 321 and one of the two second welding regions 42 on the second left connecting portion 323 are symmetrically arranged relative to the second middle vertical line 312, which can make the force on the connecting sheet 30 more balanced and even, improve the stability of the connecting sheet 30 and the cell unit 20 in the housing 10, and enhance the reliability of the cell 100.

As illustrated in FIG. 2, the first right connecting portion 322 and the second right connecting portion 324 are correspondingly disposed in the width direction of the connecting sheet 30, and a second spacing region 34 is formed between the first right connecting portion 322 and the second right connecting portion 324. Referring to FIG. 2 and FIG. 4 together, another of the two first welding regions 41 on the first right connecting portion 322 and another of the two second welding regions 42 on the second right connecting portion 324 are correspondingly disposed in the width direction of the connecting sheet 30, and another of the two first welding regions 41 on the first right connecting portion 322 and another of the two second welding regions 42 on the second right connecting portion 324 are symmetrically arranged relative to the second spacing region 34.

In the disclosure, another of the two first welding regions 41 on the first right connecting portion 322 and another of the two second welding regions 42 on the second right connecting portion 324 are symmetrically arranged relative to the second middle vertical line 312, making the force on the connecting sheet 30 more balanced and even, improving the stability of the connecting sheet 30 and the cell unit 20 in the housing 10, and enhancing the reliability of the cell 100.

In the disclosure, when one of the two first welding regions 41 on the first left connecting portion 321 and one of the two second welding regions 42 on the second left connecting portion 323 are symmetrically arranged relative to the first spacing region 33, it can be understood that the first spacing region 33 is a thicker "virtual dotted line" extending in the length direction of the connecting sheet 30, and one of the two first welding regions 41 on the first left connecting portion 321 and one of the two second welding regions 42 on the second left connecting portion 323 are symmetrically arranged relative to the "virtual dotted line". The symmetrical arrangement of another of the two first welding regions 41 on the first right connecting portion 322 and another of the two second welding regions 42 on the second right connecting portion 324 relative to the second spacing region 34 follows the same interpretation, and will not be repeated here.

In some embodiments, a length of each welding region 40 is greater than or equal to one fourth of a length of the connecting sheet 30 and less than or equal to one third of the length of the connecting sheet 30 in the length direction of the connecting sheet 30. In the disclosure, lengths of different welding regions 40 can be the same or different, the embodiments of the disclosure take the lengths of different welding regions 40 being the same as an example for explanation, but it should not be understood as a limitation on the disclosure.

As illustrated in FIG. 5, L1 represents the length of one welding region 40, L2 represents the length of the connecting sheet 30, and L1 is greater than or equal to $\frac{1}{4}$ L2 and less than or equal to $\frac{1}{3}$ L2. For example, L1 is equal to $\frac{1}{4}$ L2 (for example, $\frac{10}{40}$ L2), $\frac{39}{40}$ L2, $\frac{38}{40}$ L2, $\frac{37}{40}$ L2, $\frac{36}{40}$ L2, $\frac{35}{40}$ L2, $\frac{34}{40}$ L2, $\frac{33}{40}$ L2, $\frac{32}{40}$ L2, $\frac{31}{40}$ L2, $\frac{1}{3}$ L2 ($\frac{30}{40}$ L2), or the like.

It can be understood that if the length of the welding region 40 is less than one fourth of the length of the connecting sheet 30, the area of the welding region 40 will be smaller, and thus, the flowing area of the current between the connecting sheet 30 and the tabs 21 cannot be effectively improved, and the ability of the current flowing through the cell 100 cannot be effectively improved either. If the length of the welding region 40 is greater than one third of the length of the connecting sheet 30, the welding region 40 will extend to a side wall of the convex hull 313, which may cause the welding head to interfere with the convex hull 313 during the welding process, increase the welding difficulty of the connecting sheet 30 and the tabs 21, and reduce the assembly efficiency of the cell 100.

Therefore, in the embodiments of the disclosure, by setting the length of the welding region 40 greater than or equal to one fourth of the length of the connecting sheet 30 and less than or equal to one third of the length of the connecting sheet 30, it is possible to ensure that there is a sufficient flowing area of the current between the connecting sheet 30 and the tabs 21, thereby effectively improving the ability of the current flowing through the cell 100, reducing the welding difficulty of the connecting sheet 30 and the tabs 21, and improving the assembly efficiency of the cell 100.

In some embodiments, a width of each welding region 40 is greater than or equal to one fourth of a width of one tab connecting portion 32 and less than or equal to four fifths of the width of one tab connecting portion 32 in the width direction of the connecting sheet 30.

As illustrated in FIG. 5, W1 represents the width of the welding region 40, W2 represents the width of the tab connecting portion 32, and W1 is greater than or equal to $\frac{1}{4}$ W2 and less than or equal to $\frac{4}{5}$ W2. For example, W1 is equal to $\frac{1}{4}$ W2 (for example, $\frac{5}{20}$ W2), $\frac{6}{20}$ W2, $\frac{7}{20}$ W2, $\frac{8}{20}$ W2, $\frac{9}{20}$ W2, $\frac{10}{20}$ W2, $\frac{11}{20}$ W2, $\frac{12}{20}$ W2, $\frac{13}{20}$ W2, $\frac{14}{20}$ W2, $\frac{15}{20}$ W2, $\frac{4}{5}$ W2 ($\frac{16}{20}$ W2), or the like.

It can be understood that if the width of the welding region 40 is less than one fourth of the width of the tab connecting portion 32, the area of the welding region 40 will be smaller, and thus, the flowing area of the current between the connecting sheet 30 and the tabs 21 cannot be effectively increased, and the ability of the current flowing through the cell 100 cannot be effectively improved either. If the width of the welding region 40 is greater than four fifths of the width of the connecting sheet 30, the welding head may need to move multiple times in the width direction of the connecting sheet 30 during the process of welding each welding region 40, resulting in numerous welding operations and lower assembly efficiency.

Therefore, in the embodiments of the disclosure, by setting the width of the welding region 40 greater than or equal to one fourth of the width of the tab connecting portion 32 and less than or equal to four fifths of the width of the tab connecting portion 32, it is possible to ensure that there is a sufficient flowing area of the current between the connecting sheet 30 and the tabs 21, thereby effectively improving the ability of the current flowing through the cell 100, avoiding excessive welding, and improving the assembly efficiency of the cell 100.

In some embodiments, a length direction of each tab 21 is parallel to the length direction of the connecting sheet 30, a length of each tab 21 is greater than or equal to the length of the connecting sheet 30, and a difference between the length of the tab 21 and the length of the connecting sheet 30 is less than or equal to 20 mm.

As illustrated in FIG. 5, L2 represents the length of the connecting sheet 30, L3 represents the length of the tab 21, L3 is greater than or equal to L2, and the difference between L3 and L2 is less than or equal to 20 mm. For example, the difference between L3 and L2 is 20 mm, 19 mm, 18 mm, 17 mm, 16 mm, 15 mm, 14 mm, 14 mm, 13 mm, 12 mm, 11 mm, 10 mm, 9 mm, 8 mm, 7 mm, 6 mm, 5 mm, 4 mm, 3 mm, 2 mm, 1 mm, or the like.

It can be understood that if the length of the tab 21 is less than the length of the connecting sheet 30, the length of the welding region 40 will be smaller, resulting in a smaller flowing area of the current between the connecting sheet 30 and the tabs 21 and a weaker ability of the current flowing through the cell 100. If the length of the tab 21 is greater than the length of the connecting sheet 30, and the difference between the length of the tab 21 and the length of the connecting sheet 30 is greater than 20 mm, the tabs 21 will interfere with the cover plate 13, affecting the assembly of the cover plate 13 on the bottom casing 12.

Therefore, in the embodiments, by setting the length of each tab 21 greater than or equal to the length of the connecting sheet 30, and the difference between the length of the tab 21 and the length of the connecting sheet 30 less than or equal to 20 mm, it is possible to avoid the length of the welding region 40 being too small, and avoid the flowing area of the current between the connecting sheet 30 and the tab 21 being too small, which can improve the ability of the current flowing through the cell 100, and avoid the interference of the tabs 21 on the cover plate 13 that may affect the assembly of the cover plate 13 on the bottom casing 12.

In some embodiments, as illustrated in FIG. 4, the pole post connecting portion 31 is provided with a convex hull 313 protruding towards the pole post 11. The convex hull 313 is formed by bending a part of a surface of the connecting sheet 30 towards the pole post 11. The convex hull 313 is fixedly connected to the pole post 11 and disposed at a middle of the pole post connecting portion 31.

As illustrated in FIG. 4, a first connecting line P1 is connected between one of the two first welding regions 41 on the first left connecting portion 321 and one of the two second welding regions 42 on the second right connecting portion 324, a second connecting line P2 is connected between another of the two first welding regions 41 on the first right connecting portion 322 and another of the two second welding regions 42 on the second left connecting portion 323, and the convex hull 313 is located at the intersection position of the first connecting line P1 and the second connecting line P2. That is, distances from the convex hull 313 to four welding regions 40 are the same, making the force on the connecting sheet 30 more balanced and even, improving the stability of the connecting sheet 30 and the cell unit 20 in the housing 10, and enhancing the reliability of the cell 100.

In some embodiments, as illustrated in FIG. 4, each tab 21 is in electrical contact with a side wall of the convex hull 313. Specifically, the first tab 211 and the second tab 212 independently extend to an outer wall of the convex hull 313 in the width direction of the connecting sheet 30 and are in electrical contact with the convex hull 313, so as to increase the contact area between the connecting sheet 30 and the tabs 21, and improve the ability of the current flowing through the cell 100.

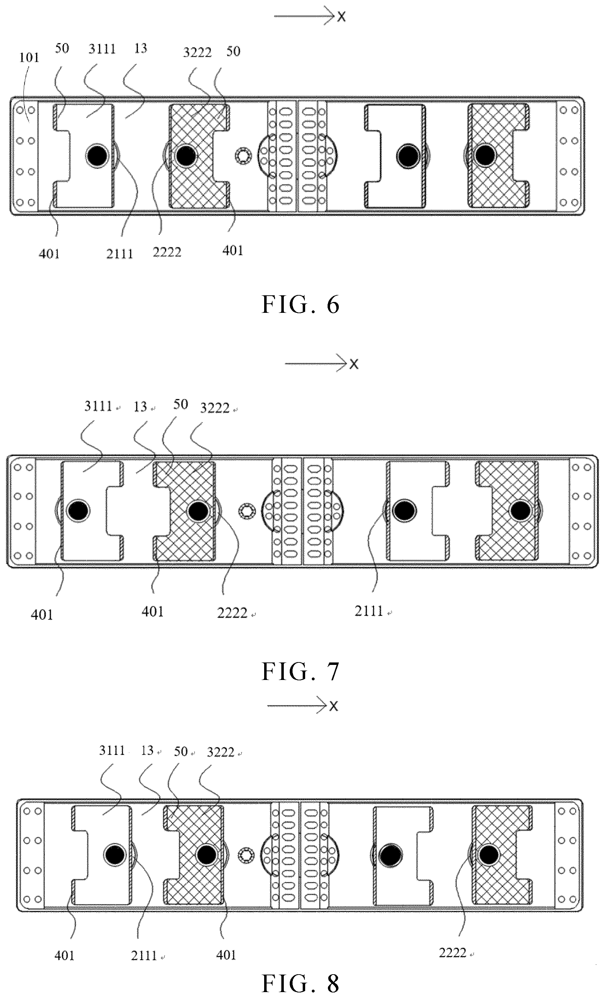

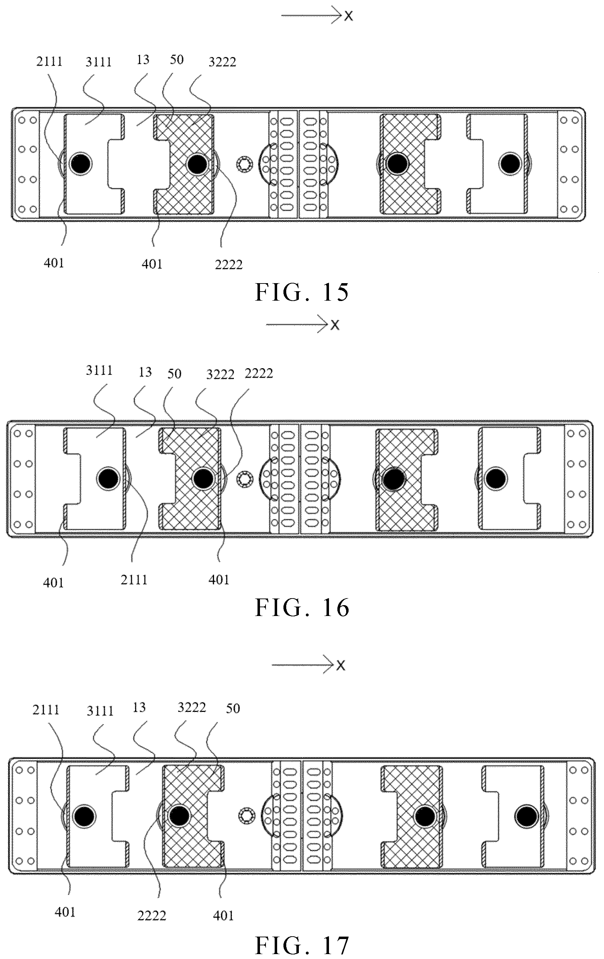

As illustrated in FIGs. 6 to 27, the cover plate 13 includes a first end surface and a second end surface 101, disposed opposite to each other in a first direction. The pole post 11 includes a plurality of first pole posts 2111 and a plurality of second pole posts 2222 arranged on the first end surface at intervals. The cell 100 include a plurality of connecting sheets 30 that include a plurality of first connecting members 3111 and a plurality of second connecting members 3222 disposed on the second end surface. Each of the first connecting members 3111 is connected to one of the first pole posts 2111, each of the second connecting members 3222 is connected to one of the second pole posts 2222, and a gap is formed between any one of the first connecting members 3111 and adjacent one of the second connecting members 3222. At least one of the first connecting members 3111 is provided with an insulating structure 401 close to adjacent one of the second connecting members 3222, and the insulating structure 401 is provided at a side of the first connecting members 3111 and the second connecting members 3222 away from the cover plate 13. In the disclosure, the first end surface is a surface of the cover plate 13 away from the cell unit 20, and the second end surface is a surface of the cover plate 13 close to the cell unit 20.

In the embodiments of the disclosure, the plurality of first pole posts 2111 and the plurality of second pole posts 2222 are arranged on the first end surface of the cover plate 13 at intervals, the plurality of first connecting members 3111 and the plurality of second connecting members 3222 are disposed on the second end surface of the cover plate 13, each of the first connecting members 3111 is connected to one of the first pole posts 2111, each of the second connecting members 3222 is connected to one of the second pole posts 2222, and a gap is formed between any one of the first connecting members 3111 and adjacent one of the second connecting members 3222, preventing a risk of short circuit caused by the lapjoint between any one of the first connecting members 3111 and adjacent one of the second connecting members 3222. Moreover, at least one of the first connecting members 3111 is provided with the insulating structure 401 close to adjacent one of the second connecting members 3222, improving the safety of the cell 100 to meet user's requirements for use of the cell 100.

It can be understood that electricity of the plurality of first pole posts 2111 are the same, electricity of the plurality of second pole posts 2222 are the same, and electricity of the first pole posts 2111 is different from electricity of the second pole posts 2222; moreover, electricity of the plurality of the first connecting members 3111 are the same, electricity of the plurality of second connecting members 3222 are the same, and electricity of the first connecting members 3111 is different from electricity of the second connecting members 3222. In some embodiments, both of the electricity of the first pole posts 2111 and the electricity of the first connecting members 3111 are positive, and then both of the electricity of the second pole posts 2222 and the electricity of the second connecting members 3222 are negative. In some embodiments, both of the electricity of the first pole posts 2111 and the electricity of the first connecting members 3111 are negative, and then both of the electricity of the second pole posts 2222 and the electricity of the second connecting members 3222 are positive.

In some embodiments of the disclosure, when the number of the first pole posts 2111 and the second pole posts 2222 are respectively two, two first pole posts 2111 and two second pole posts 2222 may be arranged in any combination according to the electricity. For example, two first pole posts 2111 and two second pole posts 2222 may be arranged in any of the following combinations: a combination of a positive pole post, a positive pole post, a negative pole post, and a negative pole post that are sequentially arranged, a combination of a positive pole post, a negative pole post, a negative pole post, and a positive pole post that are sequentially arranged, a combination of a positive pole post, a negative pole post, a positive pole post, and a negative pole post that are sequentially arranged, or the like. In some embodiments of the disclosure, when the number of the first pole posts 2111 and the second pole posts 2222 are respectively three, three first pole posts 2111 and three second pole posts 2222 may be arranged in any combination according to the electricity. For example, three first pole posts 2111 and three second pole posts 2222 may be arranged in any of the following combinations: a combination of a positive pole post, a positive pole post, a positive pole post, a negative pole post, a negative pole post, and a negative pole post that are sequentially arranged, a combination of a positive pole post, a positive pole post, a negative pole post, a positive pole post, a positive pole post, and a negative pole post that are sequentially arranged, a combination of a positive pole post, a positive pole post, a negative pole post, a positive pole post, a negative pole post, and a positive pole post that are sequentially arranged, a combination of a positive pole post, a positive pole post, a negative pole post, a negative pole post, a positive pole post, and a positive pole post that are sequentially arranged, a combination of a positive pole post, a negative pole post, a positive pole post, a positive pole post, a negative pole post, and a positive pole post that are sequentially arranged, or the like. The above combinations can improve the applicability and application scope of the cell 100.

In the embodiments of the disclosure, the first direction is a thickness direction of the cover plate 13. In FIGs. 6 to 25, X represents a second direction that is a length direction of the cover plate 13.

For the combination of a positive pole post, a negative pole post, a positive pole post, and a negative pole post that are sequentially arranged, that is, two positive pole posts and two negative pole posts are alternatively arranged. As illustrated in FIGs. 6 to 10, in some embodiments, the number of the first pole posts 2111 and the number of the second pole posts 2222 are respectively two, and two first pole posts 2111 and two second pole posts 2222 are alternatively arranged in the second direction X. The two first pole posts 2111 are two positive pole posts, electricity of two first connecting members 3111 corresponding to the two first pole posts 2111 are positive, the two second pole posts 2222 are two negative pole posts, and electricity of two second connecting members 3222 corresponding to the two second pole posts 2222 are negative.

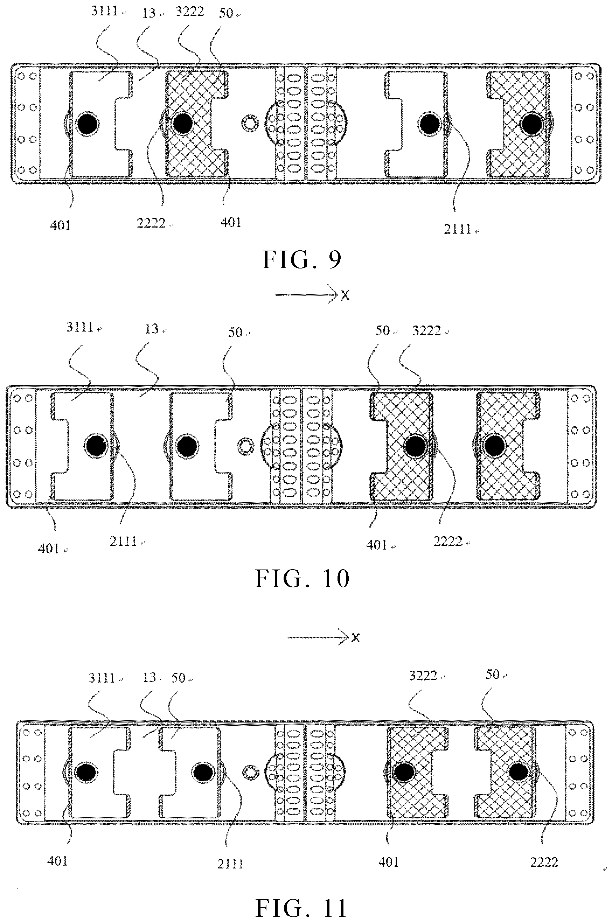

For the combination of a positive pole post, a positive pole post, a negative pole post, and a negative pole post that are sequentially arranged, as illustrated in FIGs. 10 to 13, in some embodiments, the number of the first pole posts 2111 and the number of the second pole posts 2222 are respectively two, and two first pole posts 2111 and two second pole posts 2222 are sequentially arranged in the second direction X. The two first pole posts 2111 are two positive pole posts, electricity of two first connecting members 3111 corresponding to the two first pole posts 2111 are positive, the two second pole posts 2222 are two negative pole posts, and electricity of two second connecting members 3222 corresponding to the two second pole posts 2222 are negative.

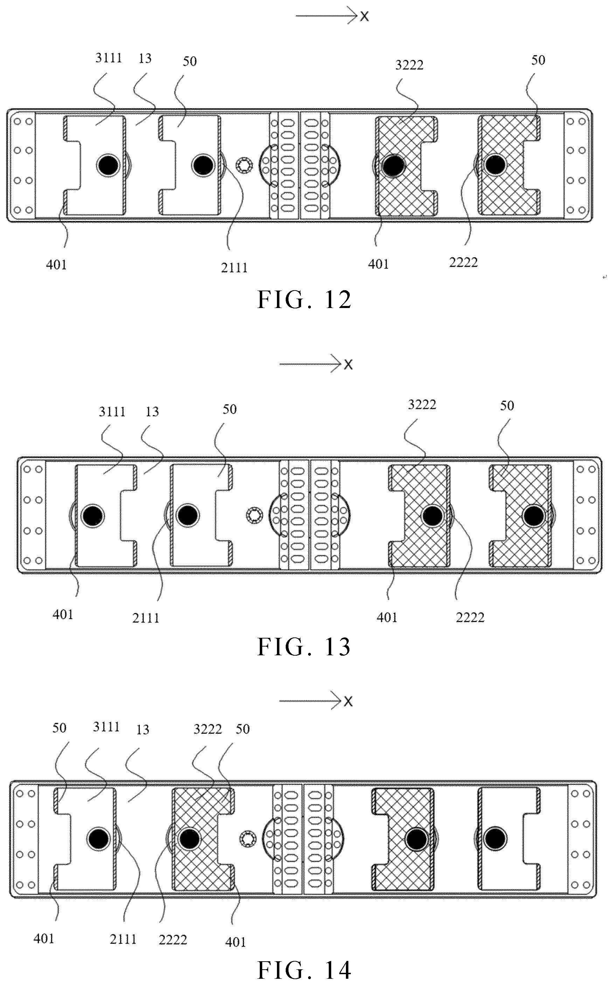

For the combination of a positive pole post, a negative pole post, a negative pole post, and a positive pole post that are sequentially arranged in the second direction X, as illustrated in FIGs. 14 to 17, in some embodiments, the number of the first pole posts 2111 and the number of the second pole posts 2222 are respectively two. The two first pole posts 2111 are two positive pole posts, electricity of two first connecting members 3111 corresponding to the two first pole posts 2111 are positive, the two second pole posts 2222 are two negative pole posts, and electricity of two second connecting members 3222 corresponding to the two second pole posts 2222 are negative.

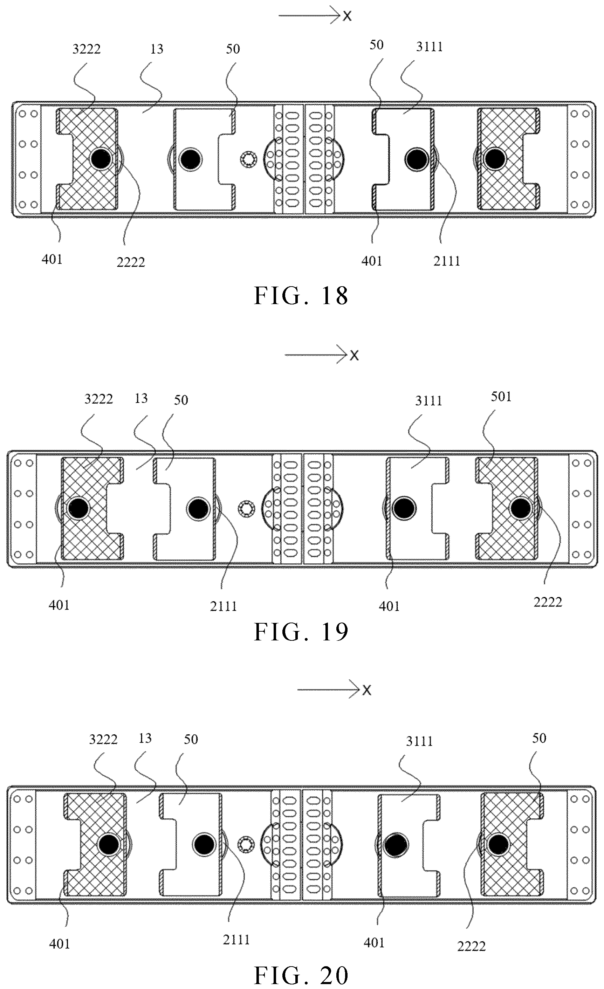

For the combination of a negative pole post, a positive pole post, a positive pole post, and a negative pole post that are sequentially arranged in the second direction X, as illustrated in FIGs. 18 to 21, in some embodiments, the number of the first pole posts 2111 and the number of the second pole posts 2222 are respectively two. The two first pole posts 2111 are two positive pole posts, electricity of two first connecting members 3111 corresponding to the two first pole posts 2111 are positive, the two second pole posts 2222 are two negative pole posts, and electricity of two second connecting members 3222 corresponding to the two second pole posts 2222 are negative.

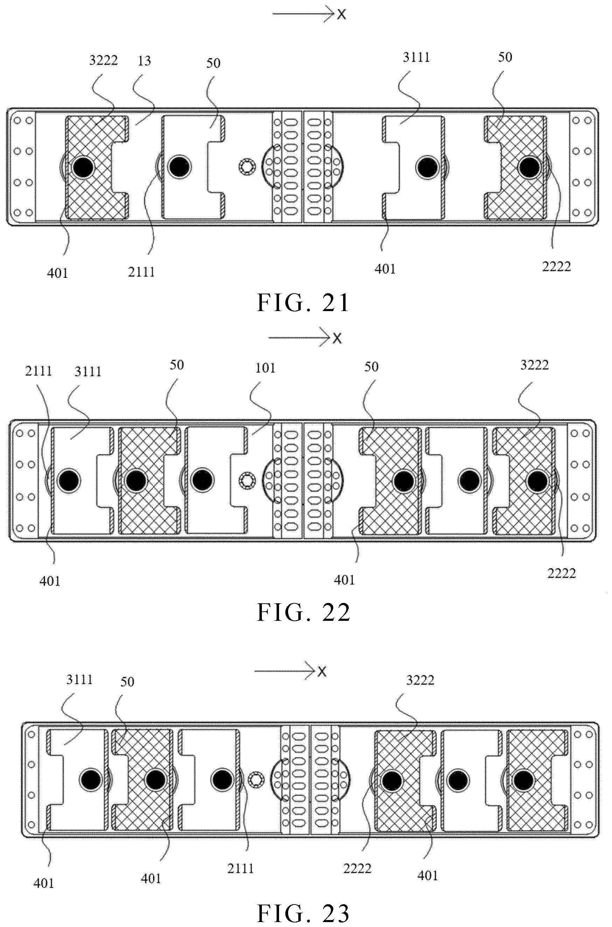

For the combination of a positive pole post, a negative pole post, a positive pole post, a negative pole post, a positive pole post, and a negative pole post that are sequentially arranged, that is, three positive pole posts and three negative pole posts are alternatively arranged. As illustrated in FIG. 22 and FIG. 23, in some embodiments, the number of the first pole posts 2111 and the second pole posts 2222 are respectively three, and three first pole posts 2111 and three second pole posts 2222 are alternatively arranged in the second direction X. The three first pole posts 2111 are three positive pole posts, electricity of three first connecting members 3111 corresponding to the three first pole posts 2111 are positive, the three second pole posts 2222 are three negative pole posts, and electricity of three second connecting members 3222 corresponding to the three second pole posts 2222 are negative.

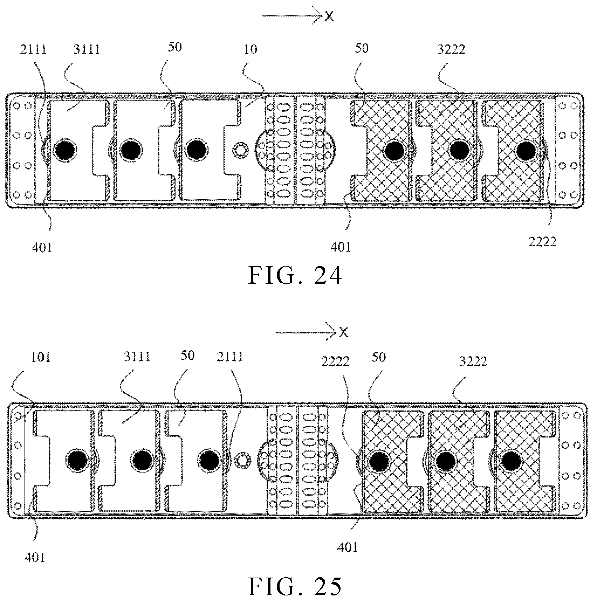

For the combination of a positive pole post, a positive pole post, a positive pole post, a negative pole post, a negative pole post, and a negative pole post that are sequentially arranged, as illustrated in FIG. 24 and FIG. 25, in some embodiments, the number of the first pole posts 2111 and the second pole posts 2222 are respectively three, and three first pole posts 2111 and three second pole posts 2222 are sequentially arranged in the second direction X. The three first pole posts 2111 are three positive pole posts, electricity of three first connecting members 3111 corresponding to the three first pole posts 2111 are positive, the three second pole posts 2222 are three negative pole posts, and electricity of three second connecting members 3222 corresponding to the three second pole posts 2222 are negative.

In the disclosure, when at least one of the first pole posts 2111 and at least one of the second pole posts 2222 are disposed adjacent to each other in the first direction, remaining ones of the first pole posts 2111 and remaining ones of the second pole posts 2222 are disposed in parallel in the second direction X.

In some embodiments, the plurality of first connecting members 3111 and the plurality of second connecting members 3222 are arranged at intervals in the second direction X that is perpendicular to the first direction. This setting makes the overall appearance and neatness of the cover plate 13 more attractive, and facilitates the connection with external components. In some embodiments, the plurality of first pole posts 2111 and the plurality of second pole posts 2222 are arranged at intervals in other directions, as long as they meet the requirements for use of the cell 100. In the disclosure, the phrase "arranged at intervals" indicates that the plurality of first pole posts 2111 and the plurality of second pole posts 2222 are arranged along the same line. The electricity of adjacent two first or second pole posts are not limited in the disclosure, and the specific arrangement can be modified according to the using environment of the cell 100.

In some embodiments, the plurality of first connecting members 3111 and the plurality of second connecting members 3222 are alternately arranged in the second direction X. This setting ensures that the first pole posts 2111 and the second pole posts 2222 are uniformly distributed on the cover plate 13, which can make the current density of a battery pack using the cell 100 more uniform during the charging and discharging processes of the battery pack, thereby reducing the heat generation of the battery pack and maintaining the stable operation of the battery pack.

In some embodiments, the number of the first connecting members 3111 is equal to the number of the second connecting members 3222, ensuring the output stability of the battery pack, so as to maintain the operation of the battery pack in order.

In some embodiments, each of two ends of each first connecting member 3111 in the second direction X is provided with the insulating structure 401, and each of two ends of each second connecting member 3222 in the second direction X is provided with the insulating structure 401, so as to improve the insulation effect of the first connection members 3111 and the second connection members 3222, prevent the risk of internal short circuit caused by the lap-joint between the first connecting members and the second connection members 3222, and improve the safety of the battery pack.

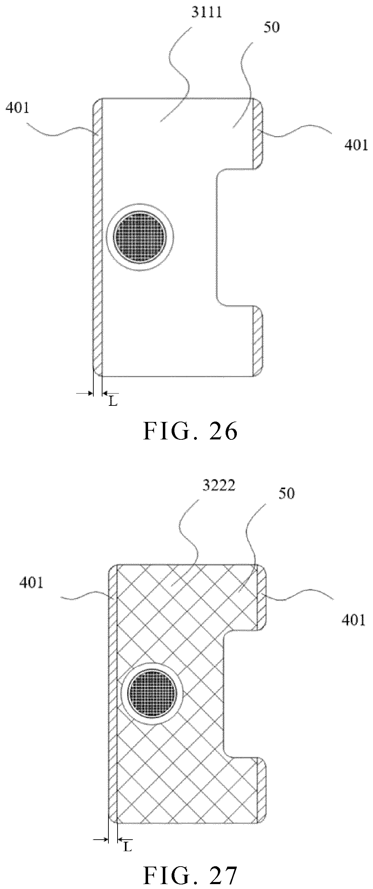

As illustrated in FIG. 26 and FIG. 27, the insulating structure 401 has an extension length L in the second direction X, L is greater than or equal to 2 mm and less than or equal to 3 mm. When L is greater than 3 mm, the extension length of the insulating structure 401 in the second direction X is larger, which may increase the cost of insulating materials for preparing the insulating structure 401, and reduce the area of the welding regions between the first connecting members 3111 or the second connecting members 3222 and the tabs 21, which is not conducive to the welding between the first connecting members 3111 or the second connecting members 3222 and the tabs 21. When L is less than 2 mm, the extension length of the insulating structure 401 in the second direction X is smaller, which may make an area of a cross-sectional surface of the insulating structure 401 smaller, resulting in a risk of short circuit caused by the lap-joint between the first connecting members 3111 and adjacent ones of the second connecting members 3222, which cannot meet the insulation requirements for the first connecting members 3111 and the second connecting members 3222. Therefore, by setting L being greater than or equal to 2 mm and less than or equal to 3 mm, it is conducive to reducing the production cost, so as to realize the mass production of components, and it can ensure the area of the welding regions between the first connecting members 3111 and the tabs 21, and between the second connecting members 3222 and the tabs 21, thereby facilitating the welding between the first connecting members 3111 and the tabs 21 and between the second connecting members 3222 and the tabs 21. Moreover, the area of the cross-sectional surface of the insulating structure 401 is larger, avoiding the risk of short circuit caused by the lap-joint between the first connecting members 3111 and adjacent ones of the second connecting members 3222, and satisfying the insulation requirements for the first connecting members 3111 and the second connecting members 3222. For example, L is 2 mm, 2.5 mm, or 3 mm. A value of L can be determined according to the requirements for the use of the first connecting members 3111 and the second connecting members 3222, which is not limited herein, and the specific setting situation can be determined according to the requirements for the use of the first connecting members 3111 and the second connecting members 3222, and is not limited herein.

In some embodiments, each of one of the first connecting members 3111 and adjacent one of the second connecting members 3222 is provided with a protrusion portion 50 extending in the second direction X, and the protrusion portion 50 of one of the first connecting members 3111 is disposed away from the protrusion portion 50 of adjacent one of the second connecting members 3222. This setting ensures that the distance between one of the first connecting members 3111 and adjacent one of the second connecting members 3222 is larger, thereby avoiding the risk of short circuit caused by the lap-joint between the first connecting members 3111 and the second connecting members 3222, and improving the stability of the battery pack during operation.

In some embodiments, the insulating structure 401 includes a ceramic silicone rubber layer or a fluororubber layer. For example, the insulating structure 401 is provided as a TC composite tape, a mica plate, a mica roll, a ceramic, a polytetrafluoroethylene, or the like, which can meet the insulation requirements for the battery pack.

In some embodiments, an extension length of the insulating structure 401 is equal to an extension length of each of the first connecting members 3111 in the width direction of the cover plate 13.

In some embodiments, the first connecting member 3111 includes an aluminum connecting member, and the second connecting member 3222 includes a copper connecting member. A positive electrode of the battery pack using the cell 100 undergoes oxidation reaction, which means that the electrochemical process of the battery pack includes an oxidation reaction, and in this electrochemical process, the positive electrode will release a large amount of heat. Since aluminum is resistant to higher temperature, so it is selected as a material of the positive electrode. In addition, aluminum has a lower potential and better electrical conductivity. A negative electrode of the battery pack using the cell 100 undergoes a reduction reaction, which means that the electrochemical process of the battery pack includes a reduction reaction. Different from the positive electrode, the negative electrode consumes a large amount of heat during the reduction reaction. Since copper has good conductivity and is resistant to room temperature, so it is selected as a material of the negative electrode. Moreover, the higher potential of copper also ensures the transmission of the current, which enables the battery pack using the cell 100 to work more stably.

Some embodiments of the disclosure further provide a battery pack including the cell 100 as described in any one of the above-mentioned embodiments. Since the battery pack of the disclosure adopts any technical solution of the above-mentioned embodiments or technical features in other embodiments, it has the beneficial effects brought by the technical solutions or the technical features of the above-mentioned embodiments, and will not be repeated herein.

## Claims

1. A cell (100), **characterized in that** the cell (100) comprises:

   a housing (10) provided with a pole post (11);
   a cell unit (20) disposed in the housing (10) and provided with a plurality of tabs (21); and
   a plurality of connecting sheets (30), wherein each of the connecting sheets (30) comprises a pole post connecting portion (31) and a plurality of tab connecting portions (32) connected to the pole post connecting portion (31), the pole post (11) is electrically connected to the pole post connecting portion (31), and one of the plurality of tabs (21) is electrically connected to at least two of the tab connecting portions (32).

2. The cell (100) of claim 1, wherein the plurality of tabs (21) comprise a plurality of positive tabs (213) and a plurality of negative tabs (214), and the connecting sheets (30) comprise two connecting sheets (30);

   one of the two connecting sheets (30) is electrically connected to at least two of the positive tabs (213), and each of the positive tabs (213) is electrically connected to at least two of the tab connecting portions (32) of the one of the two connecting sheets (30); and
   another of the two connecting sheets (30) is electrically connected to at least two of the negative tabs (214), and each of the negative tabs (214) is electrically connected to at least two of the tab connecting portions (32) of the another of the two connecting sheets (30).

3. The cell (100) of claim 1, wherein the cell unit (20) comprises a jell roll, the plurality of tabs (21) comprise a plurality of positive tabs (213) disposed on the jell roll, and one of the connecting sheets (30) is connected between adjacent two of the positive tabs (213);

   optionally, the cell unit (20) comprises a jell roll, the plurality of tabs (21) comprise a plurality of negative tabs (214) disposed on the jell roll, and one of the connecting sheets (30) is connected between adjacent two of the negative tabs (214); and

optionally, the cell unit (20) comprises a jell roll, the plurality of tabs (21) comprise a plurality of positive tabs (213) and a plurality of negative tabs (214) disposed on the jell roll, the connecting sheets (30) comprise two connecting sheets (30), one of the two connecting sheets (30) is connected between adjacent two of the positive tabs (213), and another of the two connecting sheets (30) is connected between adjacent two of the negative tabs (214).

4. The cell (100) of claim 1, wherein two of the tab connecting portions (32) connected to one of the plurality of tabs (21) are respectively disposed at two opposite sides of the pole post connecting portion (31) in a length direction of one of the connecting sheets (30).

5. The cell (100) of claim 1, wherein the cell unit (20) comprises a first jell roll (22), and the plurality of tabs (21) comprise a plurality of first tabs (211) disposed on the first jell roll (22); and

the plurality of tab connecting portions (32) of one of the connecting sheets (30) comprise a first left connecting portion (321) and a first right connecting portion (322), the first left connecting portion (321) and the first right connecting portion (322) are respectively disposed at two sides of the pole post connecting portion (31) in the length direction of the one of the connecting sheets (30), and the first left connecting portion (321) and the first right connecting portion (322) are electrically connected to one of the first tabs (211).

6. The cell (100) of claim 5, wherein the cell unit (20) further comprises a second jell roll (23), the plurality of tabs (21) further comprise a plurality of second tabs (212) disposed on the second jell roll (23), and the second tabs (212) and the first tabs (211) are disposed corresponding to each other in a width direction of one of the connecting sheets (30); and

the plurality of tab connecting portions (32) of the one of the connecting sheets (30) further comprise a second left connecting portion (323) and a second right connecting portion (324), the second left connecting portion (323) and the second right connecting portion (324) are respectively disposed at two sides of the pole post connecting portion (31) in the length of the one of the connecting sheets (30), and the second left connecting portion (323) and the second right connecting portion (324) are electrically connected to one of the second tabs (212).

7. The cell (100) of claim 6, wherein the first left connecting portion (321) and the first right connecting portion (322) are welded to one of the first tabs (211) to form two first welding regions (41), respectively, and the second left connecting portion (323) and the second right connecting portion (324) are welded to one of the second tabs (212) to form two second welding regions (42), respectively;

wherein the two first welding regions (41) are disposed opposite to each other in the length direction of one of the connecting sheets (30) and symmetrically arranged relative to the pole post connecting portion (31);
optionally, the two second welding regions (42) are disposed opposite to each other in the length direction of one of the connecting sheets (30) and symmetrically arranged relative to the pole post connecting portion (31); and
optionally, the two first welding regions (41) are disposed opposite to each other in the length direction of one of the connecting sheets (30) and symmetrically arranged relative to the pole post connecting portion (31), and the two second welding regions (42) are disposed opposite to each other in the length direction of one of the connecting sheets (30) and symmetrically arranged relative to the pole post connecting portion (31).

8. The cell (100) of claim 7, wherein the first left connecting portion (321) and the second left connecting portion (323) are disposed corresponding to each other in the width direction of one of the connecting sheets (30), and a first spacing region (33) is formed between the first left connecting portion (321) and the second left connecting portion (323); and one of the two first welding regions (41) on the first left connecting portion (321) and one of the two second welding regions (42) on the second left connecting portion (323) are disposed corresponding to each other in the width direction of one of the connecting sheets (30) and symmetrically arranged relative to the first spacing region (33);

optionally, the first right connecting portion (322) and the second right connecting portion (324) are disposed corresponding to each other in the width direction of one of the connecting sheets (30), and a second spacing region (34) is formed between the first right connecting portion (322) and the second right connecting portion (324); and another of the two first welding regions (41) on the first right connecting portion (322) and another of the two second welding regions (42) on the second right connecting portion (324) are disposed corresponding to each other in the width direction of one of the connecting sheets (30) and symmetrically arranged relative to the second spacing region (34); and
optionally, the first left connecting portion (321) and the second left connecting portion (323) are disposed corresponding to each other in the width direction of one of the connecting sheets (30), the first spacing region (33)

is formed between the first left connecting portion (321) and the second left connecting portion (323), and one of the two first welding regions (41) on the first left connecting portion (321) and one of the two second welding regions (42) on the second left connecting portion (323) are disposed corresponding to each other in the width direction of one of the connecting sheets (30) and symmetrically arranged relative to the first spacing region (33); and the first right connecting portion (322) and the second right connecting portion (324) are disposed corresponding to each other in the width direction of one of the connecting sheets (30), the second spacing region (34) is formed between the first right connecting portion (322) and the second right connecting portion (324), and another of the two first welding regions (41) on the first right connecting portion (322) and another of the two second welding regions (42) on the second right connecting portion (324) are disposed corresponding to each other in the width direction of one of the connecting sheets (30) and symmetrically arranged relative to the second spacing region (34).

9. The cell (100) of claim 7, wherein each of a length of one of the two first welding regions (41) and a length of one of the two second welding regions (42) is greater than or equal to one fourth of a length of one of the connecting sheets (30) and less than or equal to one third of the length of the one of the connecting sheets (30) in the length direction of the one of the connecting sheets (30);

optionally, each of a width of one of the two first welding regions (41) and a width of one of the two second welding regions (42) is greater than or equal to one fourth of a width of one of the tab connecting portions (32) and less than or equal to four fifths of the width of the one of the tab connecting portions (32) in the width direction of one of the connecting sheets (30); and

optionally, each of the length of one of the two first welding regions (41) and the length of one of the two second welding regions (42) is greater than or equal to one fourth of the length of one of the connecting sheets (30) and less than or equal to one third of the length of the one of the connecting sheets (30) in the length direction of the one of the connecting sheets (30); and each of the width of one of the two first welding regions (41) and the width of one of the two second welding regions (42) is greater than or equal to one fourth of the width of one of the tab connecting portions (32) and less than or equal to four fifths of the width of the one of the tab connecting portions (32) in the width direction of one of the connecting sheets (30).

10. The cell (100) of any one of claims 1 to 9, wherein a length direction of one of the tabs (21) is parallel to a length direction of one of the connecting sheets (30), a length of one of the tabs (21) is greater than or equal to a length of one of the connecting sheets (30), and a difference between the length of one of the tabs (21) and the length of one of the connecting sheets (30) is less than or equal to 20 mm;

optionally, the pole post connecting portion (31) is further provided with a convex hull (313) protruding towards the pole post (11), and the convex hull (313) is fixedly connected to the pole post (11) and disposed at a middle of the pole post connecting portion (31);

optionally, the pole post connecting portion (31) is further provided with a convex hull (313) protruding towards the pole post (11), the convex hull (313) is fixedly connected to the pole post (11), and one of the tabs (21) is in electrical contact with a sidewall of the convex hull (313).

11. The cell (100) of claim 1, wherein the housing (10) comprises a cover plate assembly comprising a cover plate (13), and the cover plate (13) comprises a first end surface and a second end surface (101) disposed opposite to each other in a thickness direction of the cover plate (13);

the pole post (11) comprises a plurality of first pole posts (2111) and a plurality of second pole posts (2222) disposed on the first end surface at intervals; and

the connecting sheets (30) comprise a plurality of first connecting members (3111) and a plurality of second connecting members (3222) disposed on the second end surface (101), each of the first connecting members (3111) is connected to one of the first pole posts (2111), each of the second connecting members (3222) is connected to one of the second pole posts (2222), and a gap is formed between any one of the first connecting members (3111) and adjacent one of the second connecting members (3222);

wherein at least one of the first connecting members (3111) is provided with an insulating structure (401) close to adjacent one of the second connecting members (3222), and the insulating structure (401) is disposed at a side of the at least one of the first connecting members (3111) away from the cover plate (13) in the thickness direction of the cover plate (13).

12. The cell (100) of claim 11, wherein the plurality of first connecting members (3111) and the plurality of second connecting members (3222) are arranged at intervals in a length direction of the cover plate (13); optionally, the plurality of first connecting members (3111) and the plurality of second connecting members (3222) are alternately arranged in the length direction of the cover plate (13).

13. The cell (100) of claim 12, wherein two ends of one of the first connecting members (3111) are respectively provided with the insulating structures (401) in the length direction of the cover plate (13), and two ends of one of the second connecting members (3222) adjacent to the one of the first connecting members (3111) are respectively provided with the insulating structure (401) in the length direction of the cover plate (13);

optionally, the insulating structure (401) has an extension length greater than or equal to 2 mm and less than or equal to 3 mm in the length direction of the cover plate (13); optionally, an extension length of the insulating structure (401) is equal to an extension length of one of the first connecting members (3111) in a width direction of the cover plate (13).

14. The cell (100) of claim 12, wherein each of one of the first connecting members (3111) and adjacent one of the second connecting members (3222) comprises a protrusion portion (50) extending in the length direction of the cover plate (13), and the protrusion portion (50) of one of the first connecting members (3111) is disposed away from the protrusion portion (50) of adjacent one of the second connecting members (3222).

15. A battery pack, **characterized in that** the battery pack comprises the cell (100) as claimed in any one of claims 1 to 14.

FIG. 1

FIG. 2

Length direction

22

211(21)       211(21)

212(21)       212(21)

23

Width direction

## FIG. 3

22    311    312    P1   P2

41(40)   41(40)     41(40)    41(40)

211(21)

321(32)      322(32)

323(32)      324(32)

212(21)

Width direction

23   42(40)     42(40)     42(40) 313    42(40)

Length direction

## FIG. 4

L3

L2

L1

W1

40    30    21

## FIG. 5

FIG. 6

FIG. 7

FIG. 8

FIG. 9

FIG. 10

FIG. 11

18

→X

3111    13    50                          3222              50

401                    2111                401        2222

# FIG. 12

→X

3111    13    50                          3222    50

401        2111                          401        2222

# FIG. 13

→X

50    3111    13    3222    50

401        2111    2222        401

# FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26

FIG. 27

**EUROPEAN SEARCH REPORT**

Application Number

EP 24 21 8629

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/030773 A1 (ACCUMULATEURS FIXES [FR]) 9 March 2023 (2023-03-09) | 1,9, 11-15 | INV. H01M50/103 |
| Y | * paragraph [0007]; figures 4, 5 * | 2,3,5,10 | H01M50/533 H01M50/536 |
| | ----- | | |
| X | CN 220 628 148 U (NINGDE CONTEMPORARY AMPEREX TECH CO LTD) 19 March 2024 (2024-03-19) * paragraph [0152]; figures 1,2,5, 7,12, 13,17 * | 1,4-9, 11-13,15 | |
| | ----- | | |
| Y | US 2023/223662 A1 (CAO HUI [CN] ET AL) 13 July 2023 (2023-07-13) * figures 1, 2, 3 * | 2,3 | |
| | ----- | | |
| Y | US 2022/393315 A1 (CHEN WENWEI [CN] ET AL) 8 December 2022 (2022-12-08) * figures 4,6,10 * | 10 | |
| | ----- | | |
| Y | WO 2024/040528 A1 (CONTEMPORARY AMPEREX TECHNOLOGY CO LTD [CN]) 29 February 2024 (2024-02-29) * figures 6-7 * | 5 | |
| | ----- | | |

TECHNICAL FIELDS SEARCHED (IPC)

H01M

The present search report has been drawn up for all claims

| Place of search | Date of completion of the search | Examiner |
|---|---|---|
| Munich | 8 May 2025 | Augé, Marc |

EPO FORM 1503 03.82 (P04C01)

EP 4 636 911 A1

## ANNEX TO THE EUROPEAN SEARCH REPORT
## ON EUROPEAN PATENT APPLICATION NO.

EP 24 21 8629

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2025

| Patent document cited in search report | | Publication date | Patent family member(s) | | Publication date |
|---|---|---|---|---|---|
| WO 2023030773 | A1 | 09-03-2023 | EP | 4396886 A1 | 10-07-2024 |
| | | | FR | 3126814 A1 | 10-03-2023 |
| | | | US | 2024387957 A1 | 21-11-2024 |
| | | | WO | 2023030773 A1 | 09-03-2023 |
| CN 220628148 | U | 19-03-2024 | CN | 118511386 A | 16-08-2024 |
| | | | CN | 220628148 U | 19-03-2024 |
| | | | EP | 4475327 A1 | 11-12-2024 |
| | | | US | 2024421446 A1 | 19-12-2024 |
| | | | WO | 2024077480 A1 | 18-04-2024 |
| US 2023223662 | A1 | 13-07-2023 | NONE | | |
| US 2022393315 | A1 | 08-12-2022 | CN | 115552702 A | 30-12-2022 |
| | | | EP | 4106088 A1 | 21-12-2022 |
| | | | HU | E067666 T2 | 28-11-2024 |
| | | | JP | 7449396 B2 | 13-03-2024 |
| | | | JP | 2023527607 A | 30-06-2023 |
| | | | KR | 20220149773 A | 08-11-2022 |
| | | | US | 2022393315 A1 | 08-12-2022 |
| | | | WO | 2022226971 A1 | 03-11-2022 |
| WO 2024040528 | A1 | 29-02-2024 | CN | 119384770 A | 28-01-2025 |
| | | | EP | 4542763 A1 | 23-04-2025 |
| | | | WO | 2024040528 A1 | 29-02-2024 |

EPO FORM P0459

For more details about this annex : see Official Journal of the European Patent Office, No. 12/82